# EUROPEAN PATENT APPLICATION

(11) **EP 3 070 991 A1**
(43) Date of publication of application: **21.09.2016**
(21) Application number: 14798413.2
(22) Date of filing: 22.05.2014
(51) Int. Cl.: H04W 76/00

(54) **COMMUNICATION LINK MANAGEMENT METHOD, DEVICE AND SYSTEM, AND COMPUTER STORAGE MEDIUM**

(30) Priority: 15.11.2013 CN 201310576455
(71) Applicant: ZTE Corporation, Shenzhen, Guangdong 518057 (CN)
(72) Inventor: WANG, Qian, Shenzhen Guangdong 518057 (CN); GUO, Yang, Shenzhen Guangdong 518057 (CN); YU, Zhong, Shenzhen Guangdong 518057 (CN); ZHI, Zhou, Shenzhen Guangdong 518057 (CN)
(74) Representative: Brevalex
(86) International application number: PCT/CN2014/078147
(87) International publication number: WO 2014/183693

(57) **Abstract**

The disclosure discloses a method, device and system for managing a communication link, and a computer storage medium. The method includes that: according to the path quality of different transmitting directions of a received signal and the path quality corresponding to a receiving direction of the signal, a sink device determines transmitting and receiving directions of a communication link (101); and the sink device establishes the communication link according to the determined receiving direction (102).

## Description

### TECHNICAL FIELD

The disclosure relates to a communication technology, and in particular to a method, a device and a system for managing a communication link, and a computer storage medium.

### BACKGROUND

Millimetre-wave wireless communications refer to a communication technology with high transmission bandwidth and high transmission rate, narrow-beam and high-gain antennae adopted in the millimetre-wave wireless communications can be used for directional communications, a spatial multiplexing ability of a communication system is enhanced, and therefore the transmission rate of the communication system reaches a gigabit level. For example, by means of beam forming of high-gain millimetre-wave antenna arrays configured for a source device and a sink device, a Multiple Input Multiple Output (MIMO) link can be established between the source device and the sink device according to a designated antenna radiation and receiving direction, thereby improving a data throughput.

In the relevant art of beam forming of the millimetre-wave antenna arrays, it is necessary for the millimetre-wave antenna arrays of the source device and the sink device to traverse all possible degrees of spatial freedom so as to find a communication link meeting requirements; the traversal process is large in information amount and high in complexity, and an optimisation process consumes much time; and in addition, when the communication link is obstructed and the quality of the link deteriorates, it is difficult to find an appropriate replaced link due to difficulty in optimal re-convergence on the premise of no influence on user experience.

### SUMMARY

The embodiments of the disclosure provide a method for managing a communication link, which is intended to find a communication link meeting requirements efficiently.

The technical solutions of the disclosure are implemented as follows.

An embodiment of the disclosure provides a method for managing a communication link, which may include that:
according to the path quality of different transmitting directions of a received signal and the path quality corresponding to a receiving direction of the signal, a sink device determines transmitting and receiving directions of a communication link; and
the sink device establishes the communication link according to the determined receiving direction.

A method for managing a communication link may include that:
a source device transmits a signal by using different transmitting directions, the path quality of different transmitting directions of the signal and the path quality corresponding to a receiving direction of the signal being configured to determine a transmitting direction of a communication link; and
the source device establishes the communication link according to the determined transmitting direction.

An embodiment of the disclosure provides a method for managing a communication link, which may include that:
a source device transmits a signal to a sink device by using different transmitting directions, and the sink device determines transmitting and receiving directions of a communication link according to the path quality of different transmitting directions of the received signal and the path quality corresponding to a receiving direction of the received signal; and
the source device establishes the communication link by using the determined transmitting direction, and the sink device establishes the communication link by using the determined receiving direction.

An embodiment of the disclosure provides a sink device, which may include:
a first communication unit, configured to receive a signal;
a first determination unit, configured to determine transmitting and receiving directions of a communication link according to the path quality of different transmitting directions of the signal received by the first communication unit and the path quality corresponding to a receiving direction of the signal; and
a first establishment unit, configured to establish the communication link according to the determined transmitting and receiving directions.

An embodiment of the disclosure provides a source device, which may include:
a second communication unit, configured to transmit a signal by using different transmitting directions;
a second determination unit, configured to determine a transmitting direction of a communication link according to the path quality of different transmitting directions of the signal and the path quality corresponding to a receiving direction of the signal; and
a second establishment unit, configured to establish the communication link by the source device according to the determined transmitting direction.

An embodiment of the disclosure provides a system for managing a communication link, which may include a sink device and a source device, wherein
the sink device is configured to determine transmitting and receiving directions of a communication link according to the path quality of different transmitting directions of a received signal and the path quality corresponding to a receiving direction of the signal, and establish the communication link according to the determined transmitting and receiving directions; and
the source device is configured to transmit a signal by using different transmitting directions, the path quality of different transmitting directions of the signal and the path quality corresponding to a receiving direction of the signal being configured to determine a transmitting direction of a communication link.

An embodiment of the disclosure provides a computer storage medium. Computer executable instructions are stored in the computer storage medium and are configured to execute any one of the methods for managing a communication link.

In the technical solutions of the embodiments of the disclosure, the sink device can determine the transmitting and receiving directions of the communication link efficiently according to the path quality of different transmitting directions of the received signal and the path quality corresponding to the receiving direction of the signal, and therefore the sink device and the source device can establish the communication link according to the determined transmitting and receiving directions.

### BRIEF DESCRIPTION OF THE DRAWINGS

Fig. 1 is an implementation flow diagram 1 of a method for managing a communication link according to an embodiment of the disclosure;
Fig. 2 is an implementation flow diagram 2 of a method for managing a communication link according to an embodiment of the disclosure;
Fig. 3 is an implementation flow diagram 3 of a method for managing a communication link according to an embodiment of the disclosure;
Fig. 4 is a composition structure diagram of a sink device according to an embodiment of the disclosure;
Fig. 5 is a composition structure diagram of a source device according to an embodiment of the disclosure;
Fig. 6 is a composition structure diagram of a system for managing a communication link according to an embodiment of the disclosure;
Fig. 7 is a flowchart of management of a millimetre-wave wireless communication link according to an embodiment of the disclosure;
Fig. 8 is a diagram of determination of a receiving direction in a heuristic mode according to an embodiment of the disclosure;
Fig. 9 is a diagram of a communication link between a source device and a sink device according to an embodiment of the disclosure;
Fig. 10a and Fig. 10b are diagrams of a qualified path searching process; and
Fig. 11a and Fig. 11b are diagrams of deterioration and replacement of a communication link.

### DETAILED DESCRIPTION

The disclosure is described below with reference to the drawings and the specific embodiments in detail. It is important to note that the characteristics of the embodiments of the disclosure can be combined under the condition of no conflicts.

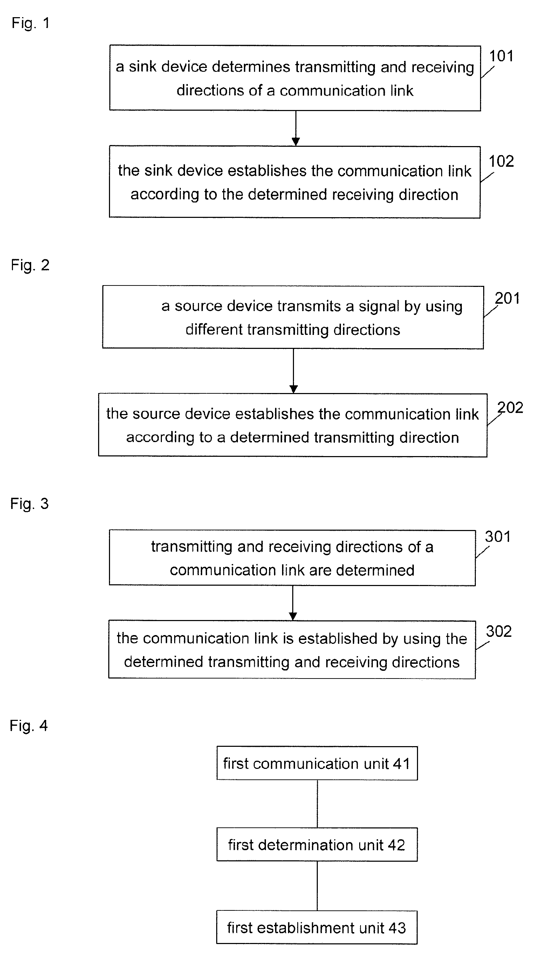

An embodiment of the disclosure provides a method for managing a communication link. Fig. 1 is an implementation flow diagram 1 of a method for managing a communication link according to an embodiment of the disclosure. As shown in Fig. 1, the method includes the steps as follows.

Step 101: According to the path quality of different transmitting directions of a received signal and the path quality corresponding to a receiving direction of the signal, a sink device determines transmitting and receiving directions of a communication link.

Step 102: The sink device establishes the communication link according to the determined transmitting and receiving directions.

Step 101 refers to processing of a path searching phase of a communication link. The communication link established in Step 102 is a communication link used in the normal communication between the sink device and the source device.

As an implementation mode, the step that the sink device determines the transmitting and receiving directions of the communication link according to the path quality corresponding to the transmitting directions of the received signal and the path quality corresponding to the receiving direction of the signal includes:
the sink device determines a transmitting direction of which the path quality is higher than a first threshold among different transmitting directions corresponding to the received signal as the transmitting direction of the communication link, and determines a receiving direction of which the path quality is higher than a second threshold among receiving directions corresponding to the transmitting direction of which the path quality is higher than the first threshold as the receiving direction of the communication link.

When the receiving and transmitting directions of the communication link are determined, as an implementation mode, the sink device can also store the determined transmitting and receiving directions in a qualified path table as qualified paths.

As an implementation mode, before the sink device determines the transmitting direction of which the path quality is higher than the first threshold among different transmitting directions corresponding to the received signal as the transmitting direction of the communication link, the method further includes that:
the sink device receives the signal corresponding to different transmitting directions, and determines the transmitting direction of which the path quality is higher than the first threshold among the transmitting directions; and
the sink device sends a first instruction for sending the signal by using the determined transmitting direction of which the path quality is higher than the first threshold.

As an implementation mode, before the receiving direction of which the path quality is higher than the second threshold among the receiving directions corresponding to the transmitting direction of which the path quality is higher than the first threshold is determined as the receiving direction of the communication link, the method further includes that:
the sink device receives the signal in the transmitting direction of which the path quality is higher than the first threshold by using different receiving directions, and determines a receiving direction of which the path quality is higher than the second threshold among the used receiving directions.

As an implementation mode, the signal received by the sink device carries synchronous information; and
correspondingly, the step that the sink device receives the signal in the transmitting direction of which the path quality is higher than the first threshold by using different receiving directions includes that:
   the sink device receives the signal in the transmitting direction of which the path quality is higher than the first threshold by using different receiving directions at a transmitting moment of a next frame with respect to a current frame according to the synchronous information carried by the signal of the current frame.

As an implementation mode, the method further includes that:
when the path quality of a transmitting direction of a current communication link is lower than the first threshold and/or the path quality of a receiving direction of the current communication link is lower than the second threshold, the sink device deletes a currently used path from the qualified path table and establishes the communication link by selecting a qualified path from the qualified path table.

As an implementation mode, the step that the sink device establishes the communication link according to the determined receiving direction includes that: the sink device establishes the communication link in one of the following modes:
establishing the communication link by using a receiving direction corresponding to the qualified path in the qualified path table, and sending a second instruction for establishing the communication link by using a transmitting direction corresponding to the selected qualified path;
sending the qualified path table, receiving a third instruction, and establishing the communication link according to a receiving direction indicated by the third instruction; and
initiating a negotiation for selecting the qualified path from the qualified path table, determining the qualified path used in the qualified path table, and establishing the communication link by using the receiving direction corresponding to the determined qualified path.

As an implementation mode, when the path quality of the transmitting direction of the current communication link is lower than the first threshold and/or the path quality of the receiving direction of the current communication link is lower than the second threshold, the method further includes that: the sink device re-establishes a communication link by executing one of the following operations:
deleting the currently used path from the qualified path table, selecting the qualified path from the qualified path table, and sending a fourth instruction for using the transmitting direction corresponding to the selected qualified path;
sending the qualified path table, receiving a fifth instruction, and establishing the communication link according to a receiving direction indicated by the fifth instruction; and
deleting the currently used path from the qualified path table, initiating a negotiation for selecting the qualified path from the qualified path table, determining the qualified path used in the qualified path table, and establishing the communication link by using the receiving direction corresponding to the determined qualified path.

As an implementation mode, before the sink device determines the transmitting and receiving directions of the communication link, the method further includes that: the sink device receives a signal in one of the following modes:
randomly receiving the signal by using different receiving directions;
receiving the signal by using different receiving directions according to a pre-set sequence;
determining a first region corresponding to a transmitting direction of a signal of which the path quality is higher than the first threshold within pre-set time, and sending a sixth instruction for continuously transmitting the signal in the first region;
determining a second region corresponding to a transmitting direction of a signal of which the path quality is lower than the first threshold within pre-set time, and sending a seventh instruction for stopping transmitting the signal continuously in the second region;
sending the path quality of different transmitting directions, and continuously receiving the signal in a third region indicated by an eighth instruction according to the received eighth instruction; and
sending the path quality of different transmitting directions, and stopping receiving the signal in a fourth region indicated by a ninth instruction according to the received ninth instruction.

An embodiment of the disclosure provides a method for managing a communication link. Fig. 2 is an implementation flow diagram 2 of a method for managing a communication link according to an embodiment of the disclosure. As shown in Fig. 2, the method includes the steps as follows.

Step 201: A source device transmits a signal by using different transmitting directions, the path quality of different transmitting directions of the signal and the path quality corresponding to a receiving direction of the signal being configured to determine a transmitting direction of a communication link.

Step 202: The source device establishes the communication link according to the determined transmitting direction.

As an implementation mode, after the source device transmits the signal by using different transmitting directions, the method further includes that:
the source device receives a first instruction, the instruction indicating information regarding a transmitting direction of which the path quality is higher than a first threshold; and
the signal is sent by using the transmitting direction indicated by the first instruction.

As an implementation mode, the step that the source device establishes the communication link according to the determined transmitting direction includes that: the source device establishes the communication link in one of the following modes:
the source device receives an instruction, and establishes the communication link according to a transmitting direction indicated by the instruction;
the source device receives a qualified path table, determines a qualified path according to the qualified path table, and sends an instruction for establishing the communication link by using a receiving direction corresponding to the determined qualified path; and
the source device initiates a negotiation for selecting a qualified path from the qualified path table, determines the used qualified path according to the qualified path table, and establishes the communication link by using a transmitting direction corresponding to the determined qualified path.

As an implementation mode, when the path quality of a transmitting direction of a current communication link is lower than the first threshold and/or the path quality of a receiving direction of the current communication link is lower than a second threshold, the method further includes that: the source device re-establishes a communication link in one of the following modes:
receiving a fourth instruction, and re-establishing the communication link according to a transmitting direction indicated by the fourth instruction;
receiving the qualified path table, deleting a current path from the qualified path table, selecting a qualified path from the qualified path table, and sending a fifth instruction for using a receiving direction corresponding to the selected qualified path; and
receiving the qualified path table, deleting the current path from the qualified path table, initiating a negotiation for selecting the qualified path from the qualified path table, determining the qualified path used in the qualified path table, and establishing the communication link by using a transmitting direction corresponding to the determined qualified path.

As an implementation mode, a mode of transmitting the signal by the source device by using different transmitting directions includes:
randomly transmitting the signal by using different transmitting directions;
transmitting the signal by using different transmitting directions according to a pre-set sequence;
receiving a sixth instruction, and continuously transmitting the signal in a first region indicated by the sixth instruction;
receiving a seventh instruction, and stopping transmitting the signal in a second region indicated by the seventh instruction;
receiving the path quality of different transmitting directions, determining a fifth region corresponding to a transmitting direction of which the path quality is higher than the first threshold, continuously transmitting the signal in the determined fifth region, determining a third region corresponding to a receiving direction of a signal of which the path quality is lower than the second threshold within pre-set time, and sending an eighth instruction for continuously receiving the signal in the third region; and
receiving the path quality of different transmitting directions, determining a sixth region corresponding to a transmitting direction of which the path quality is lower than the first threshold, continuously transmitting the signal in the determined sixth region, determining a fourth region corresponding to a receiving direction of a signal of which the path quality is lower than the second threshold within pre-set time, and sending a ninth instruction for stopping receiving the signal continuously in the fourth region.

In correspondence to the methods for managing a communication link shown in Fig. 1 and Fig. 2, an embodiment of the disclosure also provides a method for managing a communication link. Fig. 3 is an implementation flow diagram 3 of a method for managing a communication link according to an embodiment of the disclosure. As shown in Fig. 3, the method includes the steps as follows.

Step 301: A source device transmits a signal to a sink device by using different transmitting directions, and the sink device determines transmitting and receiving directions of a communication link according to the path quality of different transmitting directions of the received signal and the path quality corresponding to a receiving direction of the received signal.

Step 302: The source device establishes the communication link by using the determined transmitting direction, and the sink device establishes the communication link by using the determined receiving direction.

As an implementation mode, the step that the sink device determines the transmitting and receiving directions of the communication link according to the path quality corresponding to the transmitting directions of the received signal and the path quality corresponding to the receiving direction of the signal includes that:
the sink device determines a transmitting direction of which the path quality is higher than a first threshold among different transmitting directions corresponding to the received signal as the transmitting direction of the communication link, and determines a receiving direction of which the path quality is higher than a second threshold among receiving directions corresponding to the transmitting direction of which the path quality is higher than the first threshold as the receiving direction of the communication link.

As an implementation mode, the method further includes that:
the sink device stores the determined transmitting and receiving directions in a qualified path table as qualified paths.

As an implementation mode, before the sink device determines the transmitting direction of which the path quality is higher than the first threshold among different transmitting directions corresponding to the received signal as the transmitting direction of the communication link, the method further includes that:
the sink device receives the signal corresponding to different transmitting directions, and determines the transmitting direction of which the path quality is higher than the first threshold among the transmitting directions;
a first instruction for sending the signal by using the determined transmitting direction of which the path quality is higher than the first threshold is sent to the source device; and
the source device sends the signal by using the transmitting direction indicated by the instruction.

As an implementation mode, the step that the source device establishes the communication link by using the determined transmitting direction and the sink device establishes the communication link by using the determined receiving direction includes that: the source device and the sink device establish the communication link in one of the following modes:
establishing, by the sink device, the communication link by using a transmitting direction corresponding to a qualified path in the qualified path table, sending, to the source device, a second instruction for establishing the communication link by using the transmitting direction corresponding to the selected qualified path, and establishing, by the source device, the communication link according to the transmitting direction indicated by the second instruction;
sending, by the sink device, the qualified path table to the source device, determining, by the source device, the qualified path according to the qualified path table, sending, to the sink device, a third instruction for establishing the communication link by using a receiving direction corresponding to the determined qualified path, and establishing, by the sink device, the communication link according to the receiving direction indicated by the third instruction; and
initiating, by the source device and the sink device, a negotiation for selecting the qualified path in the qualified path table, determining the used qualified path according to the qualified path table, establishing, by the sink device, the communication link by using the receiving direction corresponding to the determined qualified path, and establishing, by the source device, the communication link by using the transmitting direction corresponding to the determined qualified path.

As an implementation mode, when the path quality of a transmitting direction of a current communication link is lower than the first threshold and/or the path quality of a receiving direction of the current communication link is lower than the second threshold, the method further includes that: the source device and the sink device re-establish a communication link in one of the following modes:
deleting, by the sink device, a currently used path from the qualified path table, selecting a qualified path from the qualified path table, sending, to the source device, a fourth instruction for using a transmitting direction corresponding to the selected qualified path, and re-establishing, by the source device, the communication link according to the transmitting direction indicated by the fourth instruction;
sending, by the sink device, the qualified path table to the source device, deleting, by the source device, the current path from the qualified path table, selecting a qualified path from the qualified path table, sending, to the sink device, a fifth instruction for using a receiving direction corresponding to the selected qualified path, and establishing, by the sink device, the communication link according to the receiving direction indicated by the fifth instruction;
deleting, by the sink device, the currently used path from the qualified path table, initiating, to the source device, a negotiation for selecting a qualified path from the qualified path table, determining the qualified path used in the qualified path table, enabling the sink device to establish the communication link by using a receiving direction corresponding to the determined qualified path, and establishing, by the source device, the communication link by using a transmitting direction corresponding to the determined qualified path; and
sending, by the sink device, the qualified path table to the source device, deleting, by the source device, the current path from the qualified path table, initiating, to the sink device, a negotiation for selecting a qualified path from the qualified path table, establishing, by the sink device, the communication link by using a receiving direction corresponding to the determined qualified path, and establishing, by the source device, the communication link by using a transmitting direction corresponding to the determined qualified path.

An embodiment of the disclosure also provides a computer storage medium. Computer executable instructions are stored in the computer storage medium and are configured to execute the method for managing a communication link shown in Fig. 1, Fig. 2 or Fig. 3.

An embodiment of the disclosure also provides a sink device. Fig. 4 is a composition structure diagram of a sink device according to an embodiment of the disclosure. As shown in Fig. 4, the sink device includes:
a first communication unit 41, configured to receive a signal;
a first determination unit 42, configured to determine transmitting and receiving directions of a communication link according to the path quality of different transmitting directions of the signal received by the first communication unit 41 and the path quality corresponding to a receiving direction of the signal; and
a first establishment unit 43, configured to establish the communication link according to the determined transmitting and receiving directions.

As an implementation mode, the first determination unit 42 is further configured to determine a transmitting direction of which the path quality is higher than a first threshold among different transmitting directions corresponding to the received signal as the transmitting direction of the communication link, and determine a receiving direction of which the path quality is higher than a second threshold among receiving directions corresponding to the transmitting direction of which the path quality is higher than the first threshold as the receiving direction of the communication link.

As an implementation mode, the first determination unit 42 is further configured to store the determined transmitting and receiving directions in a qualified path table as qualified paths.

As an implementation mode, the first communication unit 41 is further configured to receive the signal corresponding to different transmitting directions; and
the first determination unit 42 is further configured to determine the transmitting direction of which the path quality is higher than the first threshold among the transmitting directions, and trigger the first communication unit 41 to send a first instruction for sending the signal by using the determined transmitting direction of which the path quality is higher than the first threshold.

As an implementation mode, the first communication unit 41 is further configured to receive the signal in the transmitting direction of which the path quality is higher than the first threshold by using different receiving directions; and
the first determination unit 42 is further configured to determine a receiving direction of which the path quality is higher than the second threshold among the receiving directions used by the first communication unit 41.

As an implementation mode, the signal received by the first communication unit 41 carries synchronous information; and
the first determination unit 42 is further configured to trigger the first communication unit 41 to receive the signal in the transmitting direction of which the path quality is higher than the first threshold by using different receiving directions at a transmitting moment of a next frame with respect to a current frame according to the synchronous information carried by the signal of the current frame.

As an implementation mode, the first establishment unit 43 is further configured to establish the communication link by executing one of the following operations:
establishing the communication link by using a receiving direction corresponding to a qualified path in the qualified path table, and triggering the first communication unit 41 to send a second instruction for establishing the communication link by using a transmitting direction corresponding to the selected qualified path;
triggering the first communication unit 41 to send the qualified path table, and establishing the communication link according to a receiving direction indicated by a third instruction received by the first communication unit 41; and
triggering the first communication unit 41 to initiate a negotiation for selecting a qualified path from the qualified path table, determining the qualified path used in the qualified path table, and establishing the communication link by using the receiving direction corresponding to the determined qualified path.

As an implementation mode, the first establishment unit 43 is further configured to re-establish, when the path quality of a transmitting direction of a current communication link is lower than the first threshold and/or the path quality of a receiving direction of the current communication link is lower than the second threshold, a communication link by executing one of the following operations:
deleting a currently used path from the qualified path table, selecting a qualified path from the qualified path table, and triggering the first communication unit 41 to send a fourth instruction for using a transmitting direction corresponding to the selected qualified path;
triggering the first communication unit 41 to send the qualified path table, and establishing the communication link according to a receiving direction indicated by a fifth instruction received by the first communication unit 41; and
deleting the currently used path from the qualified path table, triggering the first communication unit 41 to initiate a negotiation for selecting a qualified path from the qualified path table, determining the qualified path used in the qualified path table, and establishing the communication link by using the receiving direction corresponding to the determined qualified path.

As an implementation mode, the first determination unit 42 is further configured to receive, before determining the transmitting and receiving directions of the communication link, a signal by executing one of the following operations:
triggering the first communication unit 41 to randomly receive the signal by using different receiving directions;
triggering the first communication unit 41 to receive the signal by using different receiving directions according to a pre-set sequence;
determining a first region corresponding to a transmitting direction of a signal of which the path quality is higher than the first threshold within pre-set time, and triggering the first communication unit 41 to send a sixth instruction for continuously transmitting the signal in the first region;
determining a second region corresponding to a transmitting direction of a signal of which the path quality is lower than the first threshold within pre-set time, and triggering the first communication unit 41 to send a seventh instruction for stopping transmitting the signal continuously in the second region;
triggering the first communication unit 41 to send the path quality of different transmitting directions, and continuously receiving the signal in a third region indicated by an eighth instruction according to the received eighth instruction; and
triggering the first communication unit 41 to send the path quality of different transmitting directions, and stopping receiving the signal in a fourth region indicated by a ninth instruction according to the received ninth instruction.

In practical application, the first communication unit 41 can be realized by a receiver and a transmitter in the sink device, and the first determination unit 42 and the first establishment unit 43 can be realized by a Central Processing Unit (CPU), a Digital Signal Processor (DSP) or a Field Programmable Gate Array (FPGA) in the sink device.

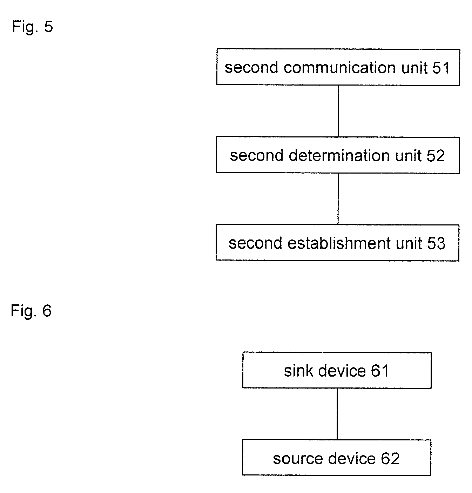

An embodiment of the disclosure also provides a source device. Fig. 5 is a composition structure diagram of a source device according to an embodiment of the disclosure. As shown in Fig. 5, the source device includes:
a second communication unit 51, configured to transmit a signal by using different transmitting directions;
a second determination unit 52, configured to determine a transmitting direction of a communication link according to the path quality of different transmitting directions of the signal and the path quality corresponding to a receiving direction of the signal; and
a second establishment unit 53, configured to establish, by the source device, the communication link according to the determined transmitting direction.

As an implementation mode, the second communication unit 51 is further configured to: receive a first instruction after transmitting the signal by using different transmitting directions, the first instruction indicating information regarding a transmitting direction of which the path quality is higher than a first threshold; and
send the signal by using the transmitting direction indicated by the first instruction.

As an implementation mode, the second establishment unit 53 is further configured to establish the communication link by executing one of the following operations:
triggering the second communication unit 51 to receive a second instruction, and establishing the communication link according to a transmitting direction indicated by the second instruction;
triggering the second communication unit 51 to receive a qualified path table, determining a qualified path according to the qualified path table, and triggering the second communication unit 51 to send a third instruction for establishing the communication link by using a receiving direction corresponding to the determined qualified path; and
triggering the second communication unit 51 to initiate a negotiation for selecting a qualified path from the qualified path table, determining the used qualified path according to the qualified path table, and establishing the communication link by using a transmitting direction corresponding to the determined qualified path.

As an implementation mode, the second establishment unit 53 is further configured to re-establish, when the path quality of a transmitting direction of a current communication link is lower than the first threshold and/or the path quality of a receiving direction of the current communication link is lower than a second threshold, a communication link in one of the following modes:
triggering the second communication unit 51 to receive a fourth instruction, and re-establishing the communication link according to a transmitting direction indicated by the fourth instruction;
triggering the second communication unit 51 to receive the qualified path table, deleting a current path from the qualified path table, selecting a qualified path from the qualified path table, and sending a fifth instruction for using a receiving direction corresponding to the determined qualified path; and
triggering the second communication unit 51 to receive the qualified path table, deleting the current path from the qualified path table, initiating a negotiation for selecting the qualified path from the qualified path table, determining the qualified path used in the qualified path table, and establishing the communication link by using a transmitting direction corresponding to the determined qualified path.

As an implementation mode, the second communication unit 51 is further configured to transmit the signal by using different transmitting directions in one of the following modes:
randomly transmitting the signal by using different transmitting directions;
transmitting the signal by using different transmitting directions according to a pre-set sequence;
receiving a sixth instruction, and continuously transmitting the signal in a first region indicated by the instruction;
receiving a seventh instruction, and stopping transmitting the signal in a second region indicated by the seventh instruction;
receiving the path quality of different transmitting directions, triggering the second determination unit 52 to determine a fifth region corresponding to a transmitting direction of which the path quality is higher than the first threshold, continuously transmitting the signal in the determined fifth region, triggering the second determination unit 52 to determine a third region corresponding to a receiving direction of a signal of which the path quality is lower than the second threshold within pre-set time, and sending an eighth instruction for continuously receiving the signal in the third region; and
receiving the path quality of different transmitting directions, triggering the second determination unit 52 to determine a sixth region corresponding to a transmitting direction of which the path quality is lower than the first threshold, continuously transmitting the signal in the determined sixth region, triggering the second determination unit 52 to determine a fourth region corresponding to a receiving direction of a signal of which the path quality is lower than the second threshold within pre-set time, and sending a ninth instruction for stopping receiving the signal continuously in the fourth region.

In practical application, the second communication unit 51 can be realized by a transmitter and a receiver in the source device, and the second determination unit 52 and the second establishment unit 53 can be realized by a CPU, a DSP or an FPGA in the source device.

An embodiment of the disclosure also provides a system for managing a communication link. Fig. 6 is a composition structure diagram of a system for managing a communication link according to an embodiment of the disclosure. As shown in Fig. 6, the system includes: a sink device 61 and a source device 62, wherein
the source device 62 is configured to transmit a signal by using different transmitting directions to the sink device 61;
the sink device 61 is configured to determine transmitting and receiving directions of a communication link according to the path quality of different transmitting directions of the received signal and the path quality corresponding to the receiving direction of the received signal; and
the source device 62 establishes the communication link by using the determined transmitting direction, and the sink device 61 establishes the communication link by using the determined receiving direction.

As an implementation mode, the sink device 61 is further configured to determine a transmitting direction of which the path quality is higher than a first threshold among different transmitting directions corresponding to the received signal as the transmitting direction of the communication link, and determine a receiving direction of which the path quality is higher than a second threshold among receiving directions corresponding to the transmitting direction of which the path quality is higher than the first threshold as the receiving direction of the communication link.

As an implementation mode, the sink device 61 is further configured to store the determined transmitting and receiving directions in a qualified path table as qualified paths.

As an implementation mode, the sink device 61 is further configured to: receive the signal corresponding to different transmitting directions, and determine the transmitting direction of which the path quality is higher than the first threshold among the transmitting directions; and
send a first instruction for sending the signal by using the determined transmitting direction of which the path quality is higher than the first threshold.

As an implementation mode, the sink device 61 is further configured to receive the signal in the transmitting direction of which the path quality is higher than the first threshold by using different receiving directions, and determine a receiving direction of which the path quality is higher than the second threshold among the used receiving directions.

As an implementation mode, the signal received by the sink device 61 carries synchronous information; and
correspondingly, the sink device 61 is further configured to receive the signal in the transmitting direction of which the path quality is higher than the first threshold by using different receiving directions at a transmitting moment of a next frame with respect to a current frame according to the synchronous information carried by the signal of the current frame.

As an implementation mode, the sink device 61 is further configured to establish the communication link in one of the following modes:
establishing the communication link by using a receiving direction corresponding to a qualified path in the qualified path table, and sending a second instruction for establishing the communication link by using a transmitting direction corresponding to the selected qualified path;
sending the qualified path table, receiving a third instruction, and establishing the communication link according to a receiving direction indicated by the third instruction; and
initiating a negotiation for selecting a qualified path from the qualified path table, determining the qualified path used in the qualified path table, and establishing the communication link by using the receiving direction corresponding to the determined qualified path.

As an implementation mode, the sink device 61 is further configured to re-establish, when the path quality of a transmitting direction of a current communication link is lower than the first threshold and/or the path quality of a receiving direction of the current communication link is lower than the second threshold, a communication link in one of the following modes:
deleting a currently used path from the qualified path table, selecting a qualified path from the qualified path table, and sending a fourth instruction for using a transmitting direction corresponding to the selected qualified path;
sending the qualified path table, receiving a fifth instruction, and establishing the communication link according to a receiving direction indicated by the fifth instruction; and
deleting the currently used path from the qualified path table, initiating a negotiation for selecting a qualified path from the qualified path table, determining the qualified path used in the qualified path table, and establishing the communication link by using the receiving direction corresponding to the determined qualified path.

As an implementation mode, the sink device 61 is further configured to receive, before determining the transmitting and receiving directions of the communication link, a signal in one of the following modes:
randomly receiving the signal by using different receiving directions;
receiving the signal by using different receiving directions according to a pre-set sequence;
determining a first region corresponding to a transmitting direction of a signal of which the path quality is higher than the first threshold within pre-set time, and sending a sixth instruction for continuously transmitting the signal in the first region;
determining a second region corresponding to a transmitting direction of a signal of which the path quality is lower than the first threshold within pre-set time, and sending a seventh instruction for stopping transmitting the signal continuously in the second region;
sending the path quality of different transmitting directions, and continuously receiving the signal in a third region indicated by an eighth instruction according to the received eighth instruction; and
sending the path quality of different transmitting directions, and stopping receiving the signal in a fourth region indicated by a ninth instruction according to the received ninth instruction.

As an implementation mode, the source device 62 is further configured to: receive, after transmitting the signal by using different transmitting directions, the first instruction, the instruction indicating information regarding the transmitting direction of which the path quality is higher than the first threshold; and
send the signal by using the transmitting direction indicated by the first instruction.

As an implementation mode, the source device 62 is further configured to establish the communication link in one of the following modes:
receiving the second instruction, and establishing the communication link according to the transmitting direction indicated by the second instruction;
receiving the qualified path table, determining the qualified path according to the qualified path table, and sending the third instruction for establishing the communication link by using the receiving direction corresponding to the determined qualified path; and
initiating a negotiation for selecting the qualified path from the qualified path table, determining the used qualified path according to the qualified path table, and establishing the communication link by using the transmitting direction corresponding to the determined qualified path.

As an implementation mode, the source device 62 is further configured to re-establish, when the path quality of the transmitting direction of the current communication link is lower than the first threshold and/or the path quality of the receiving direction of the current communication link is lower than the second threshold, a communication link in one of the following modes:
receiving the fourth instruction, and re-establishing the communication link according to the transmitting direction indicated by the fourth instruction;
receiving the qualified path table, deleting the current path from the qualified path table, selecting the qualified path from the qualified path table, and sending the fifth instruction for using the receiving direction corresponding to the selected qualified path; and
receiving the qualified path table, deleting the current path from the qualified path table, initiating a negotiation for selecting the qualified path from the qualified path table, determining the qualified path used in the qualified path table, and establishing the communication link by using the transmitting direction corresponding to the determined qualified path.

As an implementation mode, the source device 62 is further configured to transmit the signal by using different transmitting directions in one of the following modes:
randomly transmitting the signal by using different transmitting directions;
transmitting the signal by using different transmitting directions according to a pre-set sequence;
receiving the sixth instruction, and continuously transmitting the signal in the first region indicated by the sixth instruction;
receiving the seventh instruction, and stopping transmitting the signal in the second region indicated by the seventh instruction;
receiving the path quality of different transmitting directions, determining a fifth region corresponding to a transmitting direction of which the path quality is higher than the first threshold, continuously transmitting the signal in the determined fifth region, determining the third region corresponding to a receiving direction of a signal of which the path quality is lower than the second threshold within pre-set time, and sending the eighth instruction for continuously receiving the signal in the third region; and
receiving the path quality of different transmitting directions, determining a sixth region corresponding to a transmitting direction of which the path quality is lower than the first threshold, continuously transmitting the signal in the determined sixth region, determining the fourth region corresponding to a receiving direction of a signal of which the path quality is lower than the second threshold within pre-set time, and sending the ninth instruction for stopping receiving the signal continuously in the fourth region.

The methods and system for managing a communication link and the devices according to the embodiments of the disclosure are further explained in detail below by taking a millimetre-wave wireless communication link as an example.

The source device and the sink device in the link have a millimetre-wave antenna and a low-frequency antenna respectively. Each millimetre-wave antenna is configured to send and receive a millimetre-wave Training Signal (TS), a high-speed data signal and a control signal. Each low-frequency antenna is configured to send and receive the corresponding control signal. The management of the wireless communication link is divided into two phases, namely a path searching phase and a path selection and removal phase, which are explained below.

### 1) Path searching phase

Step 10: The source device transmits a high-frequency narrow-beam TS to the sink device via the millimetre-wave antenna at a certain time interval (appointed previously by the source device and the sink device) by pointing to different directions in sequence. It is supposed that the millimetre-wave antenna of the source device can point to n different directions marked as i1, i2, ..., in. The millimetre-wave antenna of the sink device receives the TS in sequence by adopting a wide beam, and the path quality of each transmitting direction of the source device is calculated according to the TS. When the path quality is higher than a first threshold, the sink device records a source device transmitting direction of the current TS, marked as iQ, a control frame CS1 is transferred to the source device via the low-frequency antenna, and the source device is requested to transmit the TS by holding the current transmitting direction iQ.

Step 20: After the low-frequency antenna of the source device receives the CS1, the request is acknowledged, an acknowledgement frame marked as ACK1 is sent to the sink device by using the low-frequency antenna, and then the TS is continuously sent to the sink device at a certain time interval via the millimetre-wave antenna by holding the current direction. After the low-frequency antenna of the sink device receives the ACK1, the millimetre-wave antenna points to different directions in sequence and receives the TS by using a high-frequency narrow beam (maintaining synchronisation with time at which the source device transmits the TS), wherein the TS transmitted by the source device contains corresponding synchronisation field information. After receiving a preceding frame TS, the sink device can adjust receiving time for a subsequent frame TS signal to maintain synchronisation with time at which the source device transmits a subsequent frame TS.

It is supposed that the millimetre-wave antenna of the sink device can point to m directions marked as j1, j2, ..., jm. The sink device calculates the path quality of each receiving direction according to the TS. When the path quality is higher than a second threshold, the sink device records a receiving direction of the current TS (marked as jQ), and the iQ, the jQ and the corresponding path quality are stored in the qualified path table.

### 2) Path selection and removal phase

Step 30: The sink device selects a plurality of paths from the qualified path table, transfers a control frame CS2 to the source device via the low-frequency antenna, and requests the source device to establish a high-speed millimetre-wave link according to the selected paths. After the low-frequency antenna of the source device receives the CS2, the request is acknowledged, and an acknowledgement frame ACK2 is sent to the sink device by using the low-frequency antenna; and the millimetre-wave antenna thereof is adjusted to the directions of the selected paths. After receiving the ACK2, the sink device also adjusts the millimetre-wave antenna thereof to the directions of the selected paths. So far, the source device and the sink device complete establishment of a millimetre-wave wireless link.

It is important to note that the sink device can share the qualified path table with the source device via the low-frequency antenna, and the source device selects a plurality of paths therefrom or the two devices negotiate to select a plurality of paths to establish a link.

When the quality of the communication link deteriorates namely the path quality of a transmitting direction of a current communication link is lower than the first threshold and/or the path quality of a receiving direction of the current communication link is lower than the second threshold, a new communication link can be established by using other paths in the qualified path table to replace the deteriorating link (the link can be replaced with identical or different numbers of links), and the paths of the deteriorating link are removed from the qualified path table.

It is also important to note that Step 10, Step 20 and Step 30 can be carried out in sequence to quickly establish a communication link; Step 10 and Step 20 can be repeatedly executed for many times, and after a certain number of qualified paths are accumulated, Step 30 is executed; and in a process of the high-speed data communication of a plurality of millimetre-wave links which have been established, Step 10, Step 20 and Step 30 can be continuously executed, the qualified path table is updated in real time, and the communication link is continuously corrected.

The embodiments of the disclosure have the beneficial effects as follows.

The millimetre-wave communication link can adaptively trend to an optimal path.

Unselected paths in the qualified path table can be taken as standby paths, and can quickly replace deteriorating paths in case of deteriorating of the link, thereby preventing the user experience from being influenced.

Explanations are carried out below with reference to examples. The management of the wireless communication link in the embodiments of the disclosure is divided into two phases, namely a path searching phase and a path selection and removal phase.

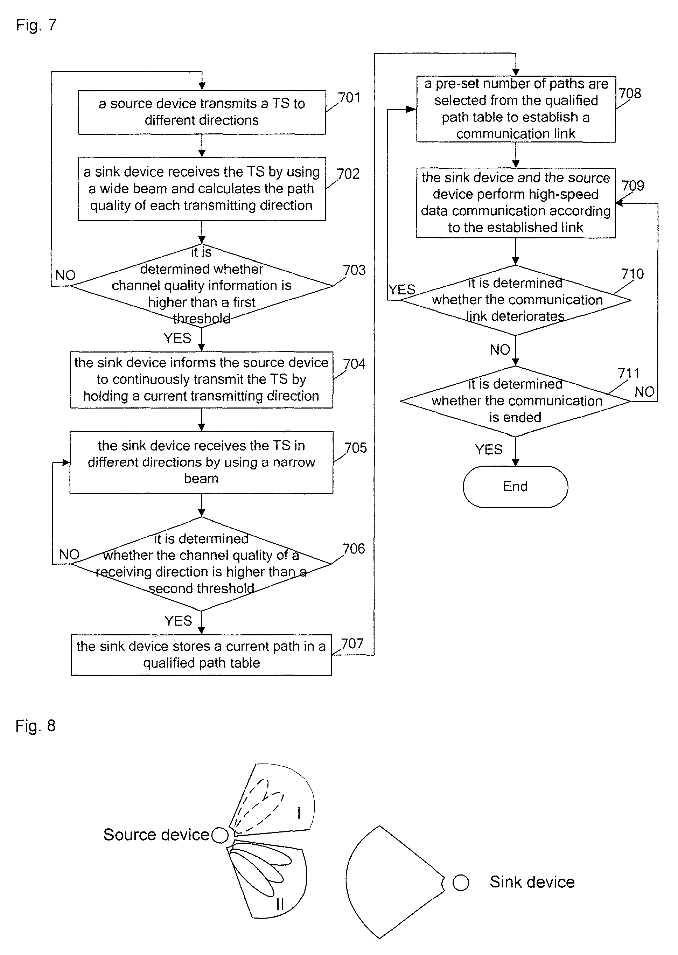

Fig. 7 is a flowchart of management of a millimetre-wave wireless communication link according to an embodiment of the disclosure. As shown in Fig. 7, the flow includes the steps as follows.

Firstly, the source device and the sink device enter the path searching phase via signalling interaction.

Step 701: The millimetre-wave antenna of the source device transmits a high-frequency narrow-beam TS to the sink device at a certain time interval by pointing to different directions in sequence.

The time interval is determined by pre-negotiation between the source device and the sink device.

It is supposed that the millimetre-wave antenna of the source device can point to n different directions marked as i1, i2, ..., in.

Step 702: The millimetre-wave antenna of the sink device receives the TS in sequence by adopting a wide beam, and the path quality of each transmitting direction of the source device is calculated according to the TS.

The path quality can adopt at least one of the following parameters:
a Signal Noise Ration (SNR), a Received Signal Strength Indication (RSSI) and a Bit Error Rate (BER).
Step 703: When the path quality is higher than a pre-set first threshold, Step 704 is executed, and otherwise, Step 701 is re-executed.
Step 704: The sink device requests the source device to transmit the TS by holding a current transmitting direction.

The sink device records the transmitting direction of the current TS, marked as iQ, a control frame CS1 is transferred to the source device via the low-frequency antenna, and the source device is requested to transmit the TS by holding the current transmitting direction iQ.

Step 705: The source device receives the TS by using a high-frequency narrow beam to different directions.

After the low-frequency antenna of the source device receives the CS1, the request is acknowledged, an acknowledgement frame ACK1 is sent to the sink device by using the low-frequency antenna, and then the TS is continuously sent to the sink device at a pre-set time interval via the millimetre-wave antenna by holding the current transmitting direction iQ. After the low-frequency antenna of the sink device receives the ACK1, the millimetre-wave antenna points to different directions in sequence and receives the TS by using the high-frequency narrow beam (maintaining synchronisation with time at which the source device transmits the TS). It is supposed that the millimetre-wave antenna of the sink device can point to m directions marked as j1, j2, ..., jm.

Step 706: The sink device determines the path quality of each receiving direction. When the channel quality is higher than a pre-set second threshold, Step 707 is executed, and otherwise, Step 705 is re-executed.

Step 708: The sink device stores a current path to the qualified path table.

The sink device calculates the path quality of each receiving direction according to the TS. When the path quality is higher than the pre-set second threshold, the sink device records a receiving direction of the current TS (marked as jQ), and the iQ, the jQ and the corresponding path quality are stored in the qualified path table. Table 1 shows a qualified path table structure.

**Table 1**

| Path sequence number (ID) | Sending direction ID | Receiving direction ID | Path quality |
|---|---|---|---|
| 1 | 2 | 4 | 0.85 |
| 2 | 3 | 3 | 0.75 |

Subsequently, the source device and the sink device enter the path selection and removal phase.

Step 708: The sink device selects a pre-set number of qualified paths from the qualified path table to establish a communication link.

The sink device selects a pre-set number of qualified paths from the qualified path table, transfers a control frame CS2 to the source device via the low-frequency antenna, and requests the source device to establish a high-speed millimetre-wave link according to the selected paths. After the low-frequency antenna of the source device receives the CS2, the request is acknowledged, and an acknowledgement frame ACK2 is sent to the sink device by using the low-frequency antenna; and the millimetre-wave antenna thereof is adjusted to the transmitting directions of the selected paths. After receiving the ACK2, the sink device also adjusts the millimetre-wave antenna thereof to the receiving directions of the selected paths. So far, the source device and the sink device complete establishment of a millimetre-wave wireless link.

It is important to note that the sink device can share the qualified path table with the source device via the low-frequency antenna, and the source device selects a plurality of paths therefrom or the two devices negotiate to select a plurality of paths to establish a link. When the quality of the communication link deteriorates, a new communication link can be established by using other paths in the qualified path table to replace the deteriorating link, the link can be replaced with identical or different numbers of links, and the paths of the deteriorating link are removed from the qualified path table.

Step 709: The sink device and the source device perform high-speed data communication according to the established link.

Step 710: It is determined whether the communication link deteriorates, if YES, Step 708 is re-executed, and if NO, Step 711 is executed.

Step 710 can be executed by the source device or the sink device.

The deterioration of the communication link includes that: the path quality of a transmitting direction of a current communication link is lower than the first threshold and/or the path quality of a receiving direction of the current communication link is lower than the second threshold.

Step 711: It is determined whether the communication is ended, if YES, processing is stopped, and if NO, Step 709 is continuously executed until the communication is ended.

It is also important to note that the path searching phase and the path selection and removal phase can be carried out in sequence to quickly establish a communication link; the path searching phase within a pre-set time can be continued, and after a certain number of qualified paths are accumulated, the path selection and removal phase is executed; and in a process of the high-speed data communication of millimetre-wave links which have been established, the qualified path table is updated in real time, and the communication link is continuously corrected.

In addition, an upper limit of the capacity of the qualified path table can be set. When the capacity of the qualified path table reaches the upper limit, if a new qualified path is superior to paths which have existed in the table, suboptimal paths in the table can be replaced. In a communication process, if all established millimetre-wave communication links fail and the qualified path table is null, it is necessary to re-execute Step 1, and searching is re-started.

Generally, a turning mode of a millimetre-wave antenna narrow beam of the source device or the sink device includes that:
the source device and the sink device turn randomly to receive or transmit a TS;
the source device and the sink device traverse a pre-set direction according to a pre-set sequence to receive or transmit the TS; and
the source device and the sink device correspondingly determine a transmitting direction and a receiving direction in a heuristic mode.

In an implementation mode that the sink device determines the receiving direction in the heuristic mode, an antenna pointing space of the millimetre-wave antenna of the sink device is divided into a pre-set number of regions according to a millimetre-wave antenna space pointing span of the sink device; if a TS of which the path quality is higher than the first threshold is continuously acquired in a certain region, the region is a preferred searching region during receiving of the TS, and the sink device will make the millimetre-wave antenna point to the region preferentially to receive the TS; and if the TS of which the path quality is higher than the first threshold cannot be found in a certain region, the TS will not be received subsequently in the region.

Wherein, the sink device sends the path quality corresponding to different transmitting directions to the source device so as to indicate a region including a preferred TS transmitting direction of the source device, or the sink device determines a region including the transmitting direction of which the path quality is higher than the first threshold according to the path quality, and informs the source device.

Fig. 8 is a diagram of determination of a receiving direction in a heuristic mode according to an embodiment of the disclosure. As shown in Fig. 8, in a region I, if the sink device continuously receives TSs of which the path quality does not exceed the first threshold within a pre-set time, the sink device informs the source device to jump over the region I via the control frame, and turns to a region II to transmit the signals. In a region II, if the sink device continuously receives TSs of which the path quality exceeds the first threshold within a pre-set time, the sink device informs the source device that the region II is a preferred TS transmitting region via the control frame, such that the source device continuously transmits the TSs in the region II.

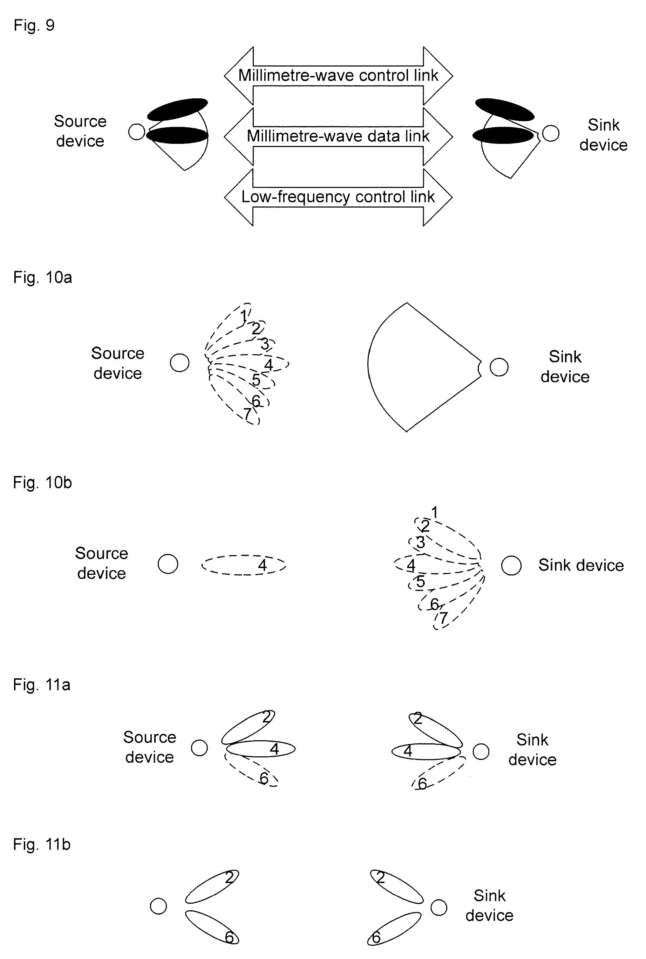

Fig. 9 is a diagram of a communication link between a source device and a sink device according to an embodiment of the disclosure. As shown in Fig. 9, a control signal between the source device and the sink device can be transferred via a link, namely a low-frequency control link, established by the low-frequency antenna, or can be transferred via millimetre-wave links which have been established. In Fig. 9, there are two millimetre-wave links which have been established, wherein a millimetre-wave control link can be used for transferring a control frame, and a millimetre-wave data link is used for transferring high-speed data. In addition, the control frame can be transferred by using a low-frequency control link.

Fig. 10a and Fig. 10b are diagrams of a qualified path searching process. As shown in Fig. 10a, the millimetre-wave antenna of the source device points to 7 directions to send the TS in sequence, and the sink device receives the TS by using a wide beam, wherein the fourth direction to which the millimetre-wave antenna of the source device points is higher than the first threshold; and subsequently, as shown in Fig. 10b, the source device continuously sends the TS in the fourth direction, and the millimetre-wave antenna of the sink device points to 7 directions to send the TS in sequence, wherein the fourth direction to which the millimetre-wave antenna of the sink device points is higher than the second threshold. Thus, a qualified path from the fourth direction of the source device to the fourth direction of the sink device is found.

Fig. 11a and Fig. 11b are diagrams of deterioration and replacement of a communication link. As shown in Fig. 11a, currently, the source device and the sink device communicate in an MIMO link including a link 1 from the second direction of the source device to the second direction of the sink device and a link 2 from the fourth direction of the source device to the fourth direction of the sink device. Meanwhile, there is a standby link from the sixth direction of the source device to the sixth direction of the sink device in the qualified path table.

If the current communicating link 2 deteriorates, as shown in Fig. 11b, a standby link 1 can replace the current link 2, and the deteriorating link 2 will be removed from the qualified path table.

Those skilled in the art could understand that all or some steps realizing the method embodiments can be completed via hardware relevant to program instructions, the program can be stored in a computer readable storage medium, and when the program is executed, the execution includes the steps of the method embodiments; and the storage medium includes: various media capable of storing program codes such as a mobile storage device, a Read-Only Memory (ROM), a Random Access Memory (RAM), a magnetic disk or an optical disc.

Or, if the integrated units of the disclosure are realized in a form of a software function module and are sold or used as independent products, the products can also be stored in the computer readable storage medium. Based on this understanding, the technical solutions of the embodiments of the disclosure can be substantially embodied in a form of a software product or parts contributing to the conventional art can be embodied in a form of a software product, and a computer software product is stored in a storage medium, which includes a plurality of instructions enabling a computer device which may be a personal computer, a server or a network device to execute all or some of the methods according to all the embodiments of the disclosure. The storage medium includes: various media capable of storing program codes such as a mobile storage device, an ROM, an RAM, a magnetic disk or an optical disc.

The above is only the specific implementation mode of the disclosure. However, the protection scope of the disclosure is not limited thereto, any of those skilled in the art can easily think of variations or replacements in the technical scope disclosed by the disclosure, and these variations or replacements should fall within the protection scope of the disclosure. Consequently, the protection scope of the disclosure should be based on the protection scope of the claims.

## Claims

1. A method for managing a communication link, comprising:
determining, by a sink device, transmitting and receiving directions of a communication link according to the path quality of different transmitting directions of a received signal and the path quality corresponding to a receiving direction of the signal; and
establishing, by the sink device, the communication link according to the determined receiving direction.

2. The method according to claim 1, wherein determining, by the sink device, the transmitting and receiving directions of the communication link according to the path quality corresponding to the transmitting directions of the received signal and the path quality corresponding to the receiving direction of the signal comprises:
determining, by the sink device, a transmitting direction of which the path quality is higher than a first threshold among different transmitting directions corresponding to the received signal as the transmitting direction of the communication link; and determining a receiving direction of which the path quality is higher than a second threshold among receiving directions corresponding to the transmitting direction of which the path quality is higher than the first threshold as the receiving direction of the communication link.

3. The method according to claim 2, further comprising:
storing, by the sink device, the determined transmitting and receiving directions in a qualified path table as qualified paths.

4. The method according to claim 2, wherein before the sink device determines the transmitting direction of which the path quality is higher than the first threshold among different transmitting directions corresponding to the received signal as the transmitting direction of the communication link, the method further comprises:
receiving, by the sink device, the signal corresponding to different transmitting directions, and determining the transmitting direction of which the path quality is higher than the first threshold among the transmitting directions; and
sending a first instruction for sending the signal by using the determined transmitting direction of which the path quality is higher than the first threshold.

5. The method according to claim 2, wherein before the receiving direction of which the path quality is higher than the second threshold among the receiving directions corresponding to the transmitting direction of which the path quality is higher than the first threshold is determined as the receiving direction of the communication link, the method further comprises:
receiving, by the sink device, the signal in the transmitting direction of which the path quality is higher than the first threshold by using different receiving directions, and determining a receiving direction of which the path quality is higher than the second threshold among the used receiving directions.

6. The method according to claim 5, wherein the signal received by the sink device carries synchronous information; and
correspondingly, receiving, by the sink device, the signal in the transmitting direction of which the path quality is higher than the first threshold by using different receiving directions comprises:
receiving, by the sink device, the signal in the transmitting direction of which the path quality is higher than the first threshold by using different receiving directions at a transmitting moment of a next frame with respect to a current frame according to the synchronous information carried by the signal of the current frame.

7. The method according to claim 3, wherein establishing, by the sink device, the communication link according to the determined receiving direction comprises:
establishing, by the sink device, the communication link in one of the following modes:
establishing the communication link by using a receiving direction corresponding to a qualified path in the qualified path table, and sending a second instruction for establishing the communication link by using a transmitting direction corresponding to the selected qualified path;
sending the qualified path table, receiving a third instruction, and establishing the communication link according to a receiving direction indicated by the third instruction; and
initiating a negotiation for selecting a qualified path from the qualified path table, determining the qualified path used in the qualified path table, and establishing the communication link by using the receiving direction corresponding to the determined qualified path.

8. The method according to claim 3, wherein when the path quality of a transmitting direction of a current communication link is lower than the first threshold and/or the path quality of a receiving direction of the current communication link is lower than the second threshold, the method further comprises: re-establishing, by the sink device, a communication link by executing one of the following operations:
deleting a currently used path from the qualified path table, selecting a qualified path from the qualified path table, and sending a fourth instruction for using a transmitting direction corresponding to the selected qualified path;
sending the qualified path table, receiving a fifth instruction, and establishing the communication link according to a receiving direction indicated by the fifth instruction; and
deleting the currently used path from the qualified path table, initiating a negotiation for selecting a qualified path from the qualified path table, determining the qualified path used in the qualified path table, and establishing the communication link by using the receiving direction corresponding to the determined qualified path.

9. The method according to any one of claims 1 to 8, wherein before the sink device determines the transmitting and receiving directions of the communication link, the method further comprises: receiving, by the sink device, a signal in one of the following modes:
randomly receiving the signal by using different receiving directions;
receiving the signal by using different receiving directions according to a pre-set sequence;
determining a first region corresponding to a transmitting direction of a signal of which the path quality is higher than the first threshold within pre-set time, and sending a sixth instruction for continuously transmitting the signal in the first region;
determining a second region corresponding to a transmitting direction of a signal of which the path quality is lower than the first threshold within pre-set time, and sending a seventh instruction for stopping transmitting the signal continuously in the second region;
sending the path quality of different transmitting directions, and continuously receiving the signal in a third region indicated by an eighth instruction according to the received eighth instruction; and
sending the path quality of different transmitting directions, and stopping receiving the signal in a fourth region indicated by a ninth instruction according to the received ninth instruction.

10. A method for managing a communication link, comprising:
transmitting, by a source device, a signal by using different transmitting directions, the path quality of different transmitting directions of the signal and the path quality corresponding to a receiving direction of the signal being configured to determine a transmitting direction of a communication link; and
establishing, by the source device, the communication link according to the determined transmitting direction.

11. The method according to claim 10, wherein after the source device transmits the signal by using different transmitting directions, the method further comprises:
receiving, by the source device, a first instruction, the instruction indicating information regarding a transmitting direction of which the path quality is higher than a first threshold; and
sending the signal by using the transmitting direction indicated by the first instruction.

12. The method according to claim 10, wherein establishing, by the source device, the communication link according to the determined transmitting direction comprises: establishing, by the source device, the communication link in one of the following modes:
receiving a second instruction, and establishing the communication link according to a transmitting direction indicated by the second instruction;
receiving a qualified path table, determining a qualified path according to the qualified path table, and sending a third instruction for establishing the communication link by using a receiving direction corresponding to the determined qualified path; and
initiating a negotiation for selecting a qualified path from the qualified path table, determining the used qualified path according to the qualified path table, and establishing the communication link by using a transmitting direction corresponding to the determined qualified path.

13. The method according to claim 10, wherein when the path quality of a transmitting direction of a current communication link is lower than the first threshold and/or the path quality of a receiving direction of the current communication link is lower than a second threshold, the method further comprises: re-establishing, by the source device, a communication link in one of the following modes:
receiving a fourth instruction, and re-establishing the communication link according to a transmitting direction indicated by the fourth instruction;
receiving the qualified path table, deleting a current path from the qualified path table, selecting a qualified path from the qualified path table, and sending a fifth instruction for using a receiving direction corresponding to the selected qualified path; and
receiving the qualified path table, deleting the current path from the qualified path table, initiating a negotiation for selecting the qualified path from the qualified path table, determining the qualified path used in the qualified path table, and establishing the communication link by using a transmitting direction corresponding to the determined qualified path.

14. The method according to any one of claims 10 to 13, wherein a mode of transmitting the signal by the source device by using different transmitting directions comprises:
randomly transmitting the signal by using different transmitting directions;
transmitting the signal by using different transmitting directions according to a pre-set sequence;
receiving a sixth instruction, and continuously transmitting the signal in a first region indicated by the sixth instruction;
receiving a seventh instruction, and stopping transmitting the signal in a second region indicated by the seventh instruction;
receiving the path quality of different transmitting directions, determining a fifth region corresponding to a transmitting direction of which the path quality is higher than the first threshold, continuously transmitting the signal in the determined fifth region, determining a third region corresponding to a receiving direction of a signal of which the path quality is lower than the second threshold within pre-set time, and sending an eighth instruction for continuously receiving the signal in the third region; and
receiving the path quality of different transmitting directions, determining a sixth region corresponding to a transmitting direction of which the path quality is lower than the first threshold, continuously transmitting the signal in the determined sixth region, determining a fourth region corresponding to a receiving direction of a signal of which the path quality is lower than the second threshold within pre-set time, and sending a ninth instruction for stopping receiving the signal continuously in the fourth region.

15. A method for managing a communication link, comprising:
transmitting, by a source device, a signal to a sink device by using different transmitting directions, and determining, by the sink device, transmitting and receiving directions of a communication link according to the path quality of different transmitting directions of the received signal and the path quality corresponding to a receiving direction of the received signal; and
establishing, by the source device, the communication link by using the determined transmitting direction, and establishing, by the sink device, the communication link by using the determined receiving direction.

16. The method according to claim 15, wherein determining, by the sink device, the transmitting and receiving directions of the communication link according to the path quality corresponding to the transmitting directions of the received signal and the path quality corresponding to the receiving direction of the signal comprises:
determining, by the sink device, a transmitting direction of which the path quality is higher than a first threshold among different transmitting directions corresponding to the received signal as the transmitting direction of the communication link; and determining a receiving direction of which the path quality is higher than a second threshold among receiving directions corresponding to the transmitting direction of which the path quality is higher than the first threshold as the receiving direction of the communication link.

17. The method according to claim 16, further comprising:
storing, by the sink device, the determined transmitting and receiving directions in a qualified path table as qualified paths.

18. The method according to claim 16, wherein before the sink device determines the transmitting direction of which the path quality is higher than the first threshold among different transmitting directions corresponding to the received signal as the transmitting direction of the communication link, the method further comprises:
receiving, by the sink device, the signal corresponding to different transmitting directions, and determining the transmitting direction of which the path quality is higher than the first threshold among the transmitting directions;
sending, to the source device, a first instruction for sending the signal by using the determined transmitting direction of which the path quality is higher than the first threshold; and
sending, by the source device, the signal by using the transmitting direction indicated by the instruction.

19. The method according to claim 16, wherein the step of establishing, by the source device, the communication link by using the determined transmitting direction and establishing, by the sink device, the communication link by using the determined receiving direction comprises: establishing, by the source device and the sink device, the communication link in one of the following modes:
establishing, by the sink device, the communication link by using a transmitting direction corresponding to a qualified path in the qualified path table, sending, to the source device, a second instruction for establishing the communication link by using the transmitting direction corresponding to the selected qualified path, and establishing, by the source device, the communication link according to the transmitting direction indicated by the second instruction;
sending, by the sink device, the qualified path table to the source device, determining, by the source device, the qualified path according to the qualified path table, sending, to the sink device, a third instruction for establishing the communication link by using a receiving direction corresponding to the determined qualified path, and establishing, by the sink device, the communication link according to the receiving direction indicated by the third instruction; and
initiating, by the source device and the sink device, a negotiation for selecting the qualified path in the qualified path table, determining the used qualified path according to the qualified path table, establishing, by the sink device, the communication link by using the receiving direction corresponding to the determined qualified path, and establishing, by the source device, the communication link by using the transmitting direction corresponding to the determined qualified path.

20. The method according to any one of claims 16 to 19, wherein when the path quality of a transmitting direction of a current communication link is lower than the first threshold and/or the path quality of a receiving direction of the current communication link is lower than the second threshold, the method further comprises:
re-establishing, by the source device and the sink device, a communication link in one of the following modes:
deleting, by the sink device, a currently used path from the qualified path table, selecting a qualified path from the qualified path table, sending, to the source device, a fourth instruction for using a transmitting direction corresponding to the selected qualified path, and re-establishing, by the source device, the communication link according to the transmitting direction indicated by the fourth instruction;
sending, by the sink device, the qualified path table to the source device, deleting, by the source device, the current path from the qualified path table, selecting a qualified path from the qualified path table, sending, to the sink device, a fifth instruction for using a receiving direction corresponding to the selected qualified path, and establishing, by the sink device, the communication link according to the receiving direction indicated by the fifth instruction;
deleting, by the sink device, the currently used path from the qualified path table, initiating, to the source device, a negotiation for selecting a qualified path from the qualified path table, determining the qualified path used in the qualified path table, enabling the sink device to establish the communication link by using a receiving direction corresponding to the determined qualified path, and establishing, by the source device, the communication link by using a transmitting direction corresponding to the determined qualified path; and
sending, by the sink device, the qualified path table to the source device, deleting, by the source device, the current path from the qualified path table, initiating, to the sink device, a negotiation for selecting a qualified path from the qualified path table, establishing, by the sink device, the communication link by using a receiving direction corresponding to the determined qualified path, and establishing, by the source device, the communication link by using a transmitting direction corresponding to the determined qualified path.

21. A sink device, comprising:
a first communication unit, configured to receive a signal;
a first determination unit, configured to determine transmitting and receiving directions of a communication link according to the path quality of different transmitting directions of the signal received by the first communication unit and the path quality corresponding to a receiving direction of the signal; and
a first establishment unit, configured to establish the communication link according to the determined transmitting and receiving directions.

22. The sink device according to claim 21, wherein
the first determination unit is further configured to determine a transmitting direction of which the path quality is higher than a first threshold among different transmitting directions corresponding to the received signal as the transmitting direction of the communication link, and determine a receiving direction of which the path quality is higher than a second threshold among receiving directions corresponding to the transmitting direction of which the path quality is higher than the first threshold as the receiving direction of the communication link.

23. The sink device according to claim 22, wherein
the first determination unit is further configured to store the determined transmitting and receiving directions in a qualified path table as qualified paths.

24. The sink device according to claim 22, wherein
the first communication unit is further configured to receive the signal corresponding to different transmitting directions; and
the first determination unit is further configured to determine the transmitting direction of which the path quality is higher than the first threshold among the transmitting directions, and trigger the first communication unit to send a first instruction for sending the signal by using the determined transmitting direction of which the path quality is higher than the first threshold.

25. The sink device according to claim 22, wherein
the first communication unit is further configured to receive the signal in the transmitting direction of which the path quality is higher than the first threshold by using different receiving directions; and
the first determination unit is further configured to determine a receiving direction of which the path quality is higher than the second threshold among the receiving directions used by the first communication unit.

26. The sink device according to claim 25, wherein the signal received by the first communication unit carries synchronous information; and
the first determination unit is further configured to trigger the first communication unit to receive the signal in the transmitting direction of which the path quality is higher than the first threshold by using different receiving directions at a transmitting moment of a next frame with respect to a current frame according to the synchronous information carried by the signal of the current frame.

27. The sink device according to claim 23, wherein the first establishment unit is further configured to establish the communication link by executing one of the following operations:
establishing the communication link by using a receiving direction corresponding to a qualified path in the qualified path table, and triggering the first communication unit to send a second instruction for establishing the communication link by using a transmitting direction corresponding to the selected qualified path;
triggering the first communication unit to send the qualified path table, and establishing the communication link according to a receiving direction indicated by a third instruction received by the first communication unit; and
triggering the first communication unit to initiate a negotiation for selecting a qualified path from the qualified path table, determining the qualified path used in the qualified path table, and establishing the communication link by using the receiving direction corresponding to the determined qualified path.

28. The sink device according to claim 23, wherein
the first establishment unit is further configured to re-establish, when the path quality of a transmitting direction of a current communication link is lower than the first threshold and/or the path quality of a receiving direction of the current communication link is lower than the second threshold, a communication link by executing one of the following operations:
deleting a currently used path from the qualified path table, selecting a qualified path from the qualified path table, and triggering the first communication unit to send a fourth instruction for using a transmitting direction corresponding to the selected qualified path;
triggering the first communication unit to send the qualified path table, and establishing the communication link according to a receiving direction indicated by a fifth instruction received by the first communication unit; and
deleting the currently used path from the qualified path table, triggering the first communication unit to initiate a negotiation for selecting a qualified path from the qualified path table, determining the qualified path used in the qualified path table, and establishing the communication link by using the receiving direction corresponding to the determined qualified path.

29. The sink device according to any one of claims 21 to 28, wherein
the first determination unit is further configured to receive, before determining the transmitting and receiving directions of the communication link, a signal by executing one of the following operations:
triggering the first communication unit to randomly receive the signal by using different receiving directions;
triggering the first communication unit to receive the signal by using different receiving directions according to a pre-set sequence;
determining a first region corresponding to a transmitting direction of a signal of which the path quality is higher than the first threshold within pre-set time, and triggering the first communication unit to send a sixth instruction for continuously transmitting the signal in the first region;
determining a second region corresponding to a transmitting direction of a signal of which the path quality is lower than the first threshold within pre-set time, and triggering the first communication unit to send a seventh instruction for stopping transmitting the signal continuously in the second region;
triggering the first communication unit to send the path quality of different transmitting directions, and continuously receiving the signal in a third region indicated by an eighth instruction according to the received eighth instruction; and
triggering the first communication unit to send the path quality of different transmitting directions, and stopping receiving the signal in a fourth region indicated by a ninth instruction according to the received ninth instruction.

30. A source device, comprising:
a second communication unit, configured to transmit a signal by using different transmitting directions;
a second determination unit, configured to determine a transmitting direction of a communication link according to the path quality of different transmitting directions of the signal and the path quality corresponding to a receiving direction of the signal; and
a second establishment unit, configured to establish, by the source device, the communication link according to the determined transmitting direction.

31. The source device according to claim 30, wherein
the second communication unit is further configured to: receive a first instruction after transmitting the signal by using different transmitting directions, the first instruction indicating information regarding a transmitting direction of which the path quality is higher than a first threshold; and
send the signal by using the transmitting direction indicated by the first instruction.

32. The source device according to claim 30, wherein the second establishment unit is further configured to establish the communication link by executing one of the following operations:
triggering the second communication unit to receive a second instruction, and establishing the communication link according to a transmitting direction indicated by the second instruction;
triggering the second communication unit to receive a qualified path table, determining a qualified path according to the qualified path table, and triggering the second communication unit to send a third instruction for establishing the communication link by using a receiving direction corresponding to the determined qualified path; and
triggering the second communication unit to initiate a negotiation for selecting a qualified path from the qualified path table, determining the used qualified path according to the qualified path table, and establishing the communication link by using a transmitting direction corresponding to the determined qualified path.

33. The source device according to claim 30, wherein the second establishment unit is further configured to re-establish, when the path quality of a transmitting direction of a current communication link is lower than the first threshold and/or the path quality of a receiving direction of the current communication link is lower than a second threshold, a communication link in one of the following modes:
triggering the second communication unit to receive a fourth instruction, and re-establishing the communication link according to a transmitting direction indicated by the fourth instruction;
triggering the second communication unit to receive the qualified path table, deleting a current path from the qualified path table, selecting a qualified path from the qualified path table, and sending a fifth instruction for using a receiving direction corresponding to the determined qualified path; and
triggering the second communication unit to receive the qualified path table, deleting the current path from the qualified path table, initiating a negotiation for selecting the qualified path from the qualified path table, determining the qualified path used in the qualified path table, and establishing the communication link by using a transmitting direction corresponding to the determined qualified path.

34. The source device according to any one of claims 30 to 33, wherein the second communication unit is further configured to transmit the signal by using different transmitting directions in one of the following modes:
randomly transmitting the signal by using different transmitting directions;
transmitting the signal by using different transmitting directions according to a pre-set sequence;
receiving a sixth instruction, and continuously transmitting the signal in a first region indicated by the instruction;
receiving a seventh instruction, and stopping transmitting the signal in a second region indicated by the seventh instruction;
receiving the path quality of different transmitting directions, triggering the second determination unit to determine a fifth region corresponding to a transmitting direction of which the path quality is higher than the first threshold, continuously transmitting the signal in the determined fifth region, triggering the second determination unit to determine a third region corresponding to a receiving direction of a signal of which the path quality is lower than the second threshold within pre-set time, and sending an eighth instruction for continuously receiving the signal in the third region; and
receiving the path quality of different transmitting directions, triggering the second determination unit to determine a sixth region corresponding to a transmitting direction of which the path quality is lower than the first threshold, continuously transmitting the signal in the determined sixth region, triggering the second determination unit to determine a fourth region corresponding to a receiving direction of a signal of which the path quality is lower than the second threshold within pre-set time, and sending a ninth instruction for stopping receiving the signal continuously in the fourth region.

35. A system for managing a communication link, comprising a sink device and a source device, wherein
the sink device is configured to determine transmitting and receiving directions of a communication link according to the path quality of different transmitting directions of a received signal and the path quality corresponding to a receiving direction of the signal, and establish the communication link according to the determined transmitting and receiving directions; and
the source device is configured to transmit the signal by using different transmitting directions, the path quality of different transmitting directions of the signal and the path quality corresponding to the receiving direction of the signal being configured to determine the transmitting direction of the communication link.

36. The system according to claim 35, wherein
the sink device is further configured to determine a transmitting direction of which the path quality is higher than a first threshold among different transmitting directions corresponding to the received signal as the transmitting direction of the communication link, and determine a receiving direction of which the path quality is higher than a second threshold among receiving directions corresponding to the transmitting direction of which the path quality is higher than the first threshold as the receiving direction of the communication link.

37. The system according to claim 36, wherein
the sink device is further configured to store the determined transmitting and receiving directions in a qualified path table as qualified paths.

38. The system according to claim 36, wherein
the sink device is further configured to: receive the signal corresponding to different transmitting directions, and determine the transmitting direction of which the path quality is higher than the first threshold among the transmitting directions; and
send a first instruction for sending the signal by using the determined transmitting direction of which the path quality is higher than the first threshold.

39. The system according to claim 36, wherein
the sink device is further configured to receive the signal in the transmitting direction of which the path quality is higher than the first threshold by using different receiving directions, and determine a receiving direction of which the path quality is higher than the second threshold among the used receiving directions.

40. The system according to claim 39, wherein the signal received by the sink device carries synchronous information; and
correspondingly, the sink device is further configured to receive the signal in the transmitting direction of which the path quality is higher than the first threshold by using different receiving directions at a transmitting moment of a next frame with respect to a current frame according to the synchronous information carried by the signal of the current frame.

41. The system according to claim 37, wherein the sink device is further configured to establish the communication link in one of the following modes:
establishing the communication link by using a receiving direction corresponding to a qualified path in the qualified path table, and sending a second instruction for establishing the communication link by using a transmitting direction corresponding to the selected qualified path;
sending the qualified path table, receiving a third instruction, and establishing the communication link according to a receiving direction indicated by the third instruction; and
initiating a negotiation for selecting a qualified path from the qualified path table, determining the qualified path used in the qualified path table, and establishing the communication link by using the receiving direction corresponding to the determined qualified path.

42. The system according to claim 37, wherein
the sink device is further configured to re-establish, when the path quality of a transmitting direction of a current communication link is lower than the first threshold and/or the path quality of a receiving direction of the current communication link is lower than the second threshold, a communication link in one of the following modes:
deleting a currently used path from the qualified path table, selecting a qualified path from the qualified path table, and sending a fourth instruction for using a transmitting direction corresponding to the selected qualified path;
sending the qualified path table, receiving a fifth instruction, and establishing the communication link according to a receiving direction indicated by the fifth instruction; and
deleting the currently used path from the qualified path table, initiating a negotiation for selecting a qualified path from the qualified path table, determining the qualified path used in the qualified path table, and establishing the communication link by using the receiving direction corresponding to the determined qualified path.

43. The system according to claim 35, wherein
the sink device is further configured to receive, before determining the transmitting and receiving directions of the communication link, a signal in one of the following modes:
randomly receiving the signal by using different receiving directions;
receiving the signal by using different receiving directions according to a pre-set sequence;
determining a first region corresponding to a transmitting direction of a signal of which the path quality is higher than the first threshold within pre-set time, and sending a sixth instruction for continuously transmitting the signal in the first region;
determining a second region corresponding to a transmitting direction of a signal of which the path quality is lower than the first threshold within pre-set time, and sending a seventh instruction for stopping transmitting the signal continuously in the second region;
sending the path quality of different transmitting directions, and continuously receiving the signal in a third region indicated by an eighth instruction according to the received eighth instruction; and
sending the path quality of different transmitting directions, and stopping receiving the signal in a fourth region indicated by a ninth instruction according to the received ninth instruction.

44. The system according to claim 35, wherein
the source device is further configured to: receive, after transmitting the signal by using different transmitting directions, the first instruction, the instruction indicating information regarding the transmitting direction of which the path quality is higher than the first threshold; and
send the signal by using the transmitting direction indicated by the first instruction.

45. The system according to claim 35, wherein
the source device is further configured to establish the communication link in one of the following modes:
receiving the second instruction, and establishing the communication link according to the transmitting direction indicated by the second instruction;
receiving the qualified path table, determining the qualified path according to the qualified path table, and sending the third instruction for establishing the communication link by using the receiving direction corresponding to the determined qualified path; and
initiating a negotiation for selecting the qualified path from the qualified path table, determining the used qualified path according to the qualified path table, and establishing the communication link by using the transmitting direction corresponding to the determined qualified path.

46. The system according to claim 35, wherein
the source device is further configured to re-establish, when the path quality of the transmitting direction of the current communication link is lower than the first threshold and/or the path quality of the receiving direction of the current communication link is lower than the second threshold, a communication link in one of the following modes:
receiving the fourth instruction, and re-establishing the communication link according to the transmitting direction indicated by the fourth instruction;
receiving the qualified path table, deleting the current path from the qualified path table, selecting the qualified path from the qualified path table, and sending the fifth instruction for using the receiving direction corresponding to the selected qualified path; and
receiving the qualified path table, deleting the current path from the qualified path table, initiating a negotiation for selecting the qualified path from the qualified path table, determining the qualified path used in the qualified path table, and establishing the communication link by using the transmitting direction corresponding to the determined qualified path.

47. The system according to any one of claims 35 to 46, wherein the source device is further configured to transmit the signal by using different transmitting directions in one of the following modes:
randomly transmitting the signal by using different transmitting directions;
transmitting the signal by using different transmitting directions according to a pre-set sequence;
receiving the sixth instruction, and continuously transmitting the signal in the first region indicated by the sixth instruction;
receiving the seventh instruction, and stopping transmitting the signal in the second region indicated by the seventh instruction;
receiving the path quality of different transmitting directions, determining a fifth region corresponding to a transmitting direction of which the path quality is higher than the first threshold, continuously transmitting the signal in the determined fifth region, determining the third region corresponding to a receiving direction of a signal of which the path quality is lower than the second threshold within pre-set time, and sending the eighth instruction for continuously receiving the signal in the third region; and
receiving the path quality of different transmitting directions, determining a sixth region corresponding to a transmitting direction of which the path quality is lower than the first threshold, continuously transmitting the signal in the determined sixth region, determining the fourth region corresponding to a receiving direction of a signal of which the path quality is lower than the second threshold within pre-set time, and sending the ninth instruction for stopping receiving the signal continuously in the fourth region.

48. A computer storage medium, computer executable instructions being stored in the computer storage medium and being configured to execute a method for managing a communication link according to any one of claims 1 to 9.

49. A computer storage medium, computer executable instructions being stored in the computer storage medium and being configured to execute a method for managing a communication link according to any one of claims 10 to 14.
